# EUROPÄISCHE PATENTANMELDUNG

(11) **EP 2 548 727 A1**
(43) Veröffentlichungstag der Anmeldung: **23.01.2013**
(21) Anmeldenummer: 11175080.8
(22) Anmeldetag: 22.07.2011
(51) Int. Cl.: B32B 17/10, B32B 27/06, B32B 27/08

(54) **Hochfeste Folienlaminate mit Schichten von weichmacherhaltigem Polyvinyl(n)acetal und weichmacherhaltigem Polyvinyl(iso)acetal**

(71) Anmelder: Kuraray Europe GmbH, 65926 Frankfurt am Main (DE)
(72) Erfinder: Meise, Markus, Dr., 65185 Wiesbaden (DE); Steuer, Martin, Dr., 65835 Liederbach (DE); Frank, Michael, Dr., 55268 Nieder-Olm (DE); Beekhuizen, Jan, Dr., 53844 Troisdorf (DE); Keller, Uwe, Dr., 53177 Bonn (DE)
(74) Vertreter: Kisters, Michael Marcus

(57) **Zusammenfassung**

Die Erfindung betrifft Folienlaminate aufgebaut aus mindestens drei Schichten A, B und C, jeweils enthaltend mindestens einen Weichmacher und mindestens ein Polyvinylacetal wobei mindestens eine der Schichten A, B oder C als Polyvinylacetal mindestens ein Polyvinyl(iso)acetal mit einem Anteil an Polyvinylalkoholgruppen von 10 - 25 Gew.% und einem Anteil an Polyvinyl(iso)acetalgruppen von 50 - 80 Gew.% enthält.

Die Folienlaminate können zur Herstellung von Glas/Folienlaminat/Glas-Verbünden für Kraftfahrzeuge, Flugzeuge, Schiffe, Architekturverglasungen, Fassadenbauteilen oder zur Herstellung von Photovoltaikmodulen verwendet werden.

## Beschreibung

### Technisches Gebiet

Die Erfindung betrifft ein z.B. als Zwischenschicht in Verbundsicherheitsgläsern geeignetes Folienlaminat, das aus mindestens drei Schichten auf der Basis von weichmacherhaltigen Polyvinyl(n)acetalen und/oder Polyvinyl(iso)acetalen aufgebaut ist und gute Penetrationseigenschaften aufweist.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiges Polyvinylbutyral (PVB) verwendet, erhältlich aus der Umsetzung von Polyvinylalkohol mit n-Butyraldehyd.

Ein immer wichtiger werdendes Merkmal von Verbundverglasungen ist deren Penetrationsfestigkeit d.h. deren Widerstandsfähigkeit gegenüber äußerer Krafteinwirkung. Dies kann durch eine dickere Glasscheibe, aber auch durch entsprechende Zwischenschichtfolien eingestellt werden. So sind z.B. sog. "Hurricane-proof" Verglasungen bekannt, die verbesserten Schutz gegen umherfliegende Objekte bieten. Hierzu werden in der Regel dickere Standardfolien aus PVB eingesetzt, was aber die Transparenz der Verglasung herabsetzt. Zudem ist eine dickere Verglasung auf Grund der limitierten Einbautiefe und der höheren Kosten unerwünscht.

Weiterhin können zur Verbesserung der Penetrationsfestigkeit von Verbundverglasungen mechanisch stabilere Folien z.B. aus PET oder PU zwischen zwei PVB-Folien einlaminiert werden. Dies bedeutet aber einen zusätzlichen Verarbeitungsschritt und birgt die Gefahr von unerwünschter Delamination.

Allgemein kann die mechanische Festigkeit von PVB-Folien durch deren Weichmachergehalt oder den Anteil an Polyvinylalkohol- oder Polyvinylacetatgruppen im eingesetzten Polyvinylacetal eingestellt werden.

So beschreiben z.B. US 5,340,654 oder WO 2006/102049 Mehrschichtsysteme, bei dem eine erste Schicht ein Polyvinylbutyral mit einem hohen Restacetatgehalt und eine zweite Schicht mit einem Polyvinylbutyral mit einem niedrigen Restacetatgehalt enthält.

Analog beschreibt WO 2008/137367 Mehrschichtsysteme bei denen sich die Teilschichten aus Polyvinylbutyral in ihrem Polyvinylalkoholgehalt unterscheiden.

Durch die unterschiedlichen Restacetatgehalte bzw. unterschiedlichen Anteile an Polyvinylalkoholgruppen weisen die Teilschichten einen unterschiedlichen Weichmachergehalt und damit unterschiedliche mechanische Festigkeiten auf.

Die bekannten Mehrschichtfolien basieren auf Polyvinylbutyral, das durch Umsetzung von Polyvinylalkohol mit n-Butyraldehyd erhältlich ist. Bei Verwendung von Polyvinylbutyralen mit unterschiedlichen Polyvinylalkohol- oder Polyvinylacetatgehalten ergeben sich unterschiedliche Weichmachergehalte der Schichten, die sich durch Migration zum Teil angleichen können.

Die Migration von Weichmacher kann auch zu Unverträglichkeiten mit der polymeren Matrix und damit zum Ausschwitzen von Weichmacher führen. Die mechanischen Eigenschaften wie Zug- oder Reissfestigkeit der Folie hängen ebenfalls stark vom Weichmachergehalt ab. In der Regel verschlechtern sich die mechanischen Eigenschaften der Folie bei Zunahme des Weichmachergehalts bzw. mit abnehmender Anzahl an Polyvinylalkoholgruppen des verwendeten Polyvinylbutyrals.

Aufgabe der vorliegenden Erfindung war es daher, Mehrschichtfolien z.B. für Verbundverglasungen mit verbesserten mechanischen Eigenschaften herzustellen, die durch die Auswahl der eingesetzten Polyvinylacetale eine hohe Weichmacherverträglichkeit aufweisen.

Es wurde überraschend gefunden, dass Folienlaminate enthaltend Polyvinylacetale, die aus mindestens drei Teilschichten aufgebaut sind, von denen zumindest eine Teilschicht Polyvinyl(iso)acetal enthält, gegenüber Folienlaminate die nur Teilschichten basierend auf Polyvinyl(n) acetal enthalten, eine deutlich verbesserte Weichmacherverträglichkeit aufweisen.

Mischungen von Polyvinyl(iso)acetal mit Dibutylphatalat als Weichmacher sind durch J. Fitzhugh und R Croizer J. Polym. Sci (1951) Vol VIII, S. 225-241 beschrieben. Diese Publikation betrifft nicht die Herstellung von Folien und deren Verwendung.

Weichmacherhaltige Polyvinyl(iso)acetale sind weiterhin aus US 2008/0286542 zur Herstellung von Zwischenschichtfilmen für dekorative Glaselemente bekannt. Die hier beschriebenen Polyvinyl(iso)acetale weisen für Verbundsicherheitsverglasungen einen zu niedrigen Acetalisierungsgrad von 8-30 Gew.% und damit eine ungenügende Weichmacheraufnahme auf. Dementsprechend offenbart US 2008/0286542 nur Mehrschichtfolien, bei denen weichmacherhaltiges Polyvinyl(iso)acetal mit niedrigem Acetalisierungsgrad zwischen zwei Schichten von weichmacherhaltigem Polyvinyl(n)acetal einlaminiert ist.

Gegenstand der vorliegenden Erfindung ist daher ein Folienlaminat, aufgebaut aus mindestens drei Schichten A, B und C, jeweils enthaltend mindestens einen Weichmacher und mindestens ein Polyvinylacetal wobei mindestens eine der Schichten A, B oder C als Polyvinylacetal mindestens ein Polyvinyl(iso)acetal mit einem Anteil an Polyvinylalkoholgruppen von 10 - 25 Gew.% und einem Anteil an Polyvinyl(iso)acetalgruppen von 50 - 80 Gew.% enthält.

Folienlaminate mit drei Schichten haben sich in der Praxis als gut herstellbar erweisen. Die erfindungsgemäßen Folienlaminate können auch aus mehr als drei Schichten (z.B. 4, 5, 6 oder 7) bestehen, wobei die Schichten die genannten oder im Folgenden aufgeführten Eigenschaften oder Zusammensetzungen aufweisen. Die Ausführungsformen mit den Schichtfolgen A, B und C sind beispielhaft zu verstehen. Die vorliegende Erfindung umfasst auch z.B. Ausführungsformen mit den Schichtfolgen A, B, C, A oder A, B, C, A, B oder A, B, C, A, B, C mit den beschriebenen Zusammensetzungen der Schichten A, B und C.

In einer zweiten Ausführungsform der Erfindung weisen die Folienlaminate die folgende Abfolge und Zusammensetzung der Schichten A, B und C auf:
- A enthaltend mindestens einen ersten Weichmacher und ein erstes Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B enthaltend mindestens einen zweiten Weichmacher und ein Polyvinyl(n)acetal mit einem Anteil an Polyvinylalkoholgruppen von 10 - 25 Gew.% und
- Teilfolie C, enthaltend mindestens einen dritten Weichmacher und ein zweites Polyvinyl(iso)acetal mit einem Anteil an Polyvinyl(iso)acetalgruppen von 50 - 80 Gew.% und einem Anteil an Polyvinylalkoholgruppen von 10 - 25 Gew.%.

In einer dritten Ausführungsform der Erfindung weisen die Folienlaminate die folgende Abfolge und Zusammensetzung der Schichten A, B und C auf:
- A, enthaltend mindestens einen ersten Weichmacher und ein erstes Polyvinyl(n)acetal mit einem Anteil an Polyvinylalkoholgruppen von 10 - 25 Gew.% und
- B, enthaltend mindestens einen zweiten Weichmacher und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- C, enthaltend mindestens einen dritten Weichmacher und ein zweites Polyvinyl(n)acetal mit einem Anteil an Polyvinylalkoholgruppen von 10 - 25 Gew.%.

In einer vierten Ausführungsform der Erfindung weisen die Folienlaminate die folgende Abfolge und Zusammensetzung der Schichten A, B und C auf:
- A, enthaltend mindestens einen ersten Weichmacher und ein erstes und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B, enthaltend mindestens einen zweiten Weichmacher und zweites Polyvinyl(iso)acetal mit einem Anteil an Polyvinyl(iso)acetalgruppen von 50-80 Gew.% und einem Anteil an Polyvinylalkoholgruppen von 10 - 25 Gew.% und
- C, enthaltend mindestens einen dritten Weichmacher und ein drittes Polyvinyl(iso)acetal mit einem Anteil an Polyvinyl(iso)acetalgruppen von 50 - 80 Gew.% und einem Anteil an Polyvinylalkoholgruppen von 10 - 25 Gew.%.

Die erfindungsgemäß eingesetzten Schichten enthalten Polyvinylacetale, die durch Acetalisierung von Polyvinylalkoholen mit jeweils "n"- (d.h. linearen Verbindungen) oder "iso"-Aldehyden bzw -Ketoverbindungen (d.h. verzweigten Verbindungen) erhalten werden.

Bevorzugt resultieren die erfindungsgemäß verwendeten Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe. Die zur Herstellung der Polyvinyl(iso)acetale eingesetzten aliphatischen Ketoverbindungeb können in verschiedenen Schichten gleich oder unterschiedlich sein. Bevorzugt sind die aliphatischen Ketoverbindungen zur Herstellung der Polyvinyl(iso)acetale in verschiedenen Schichten identisch; besonders bevorzugt sind die Polyvinyl(iso)acetale in verschiedenen Schichten chemisch identisch dh weisen gleiche Anteile an Polyvinyalkohol- und Polyvinylacetatgruppen sowei Polymerisationsgrad auf. Insbesondere wird zur Herstellung der Polyvinyl(iso)acetale iso-Butyraldehyd verwendet.

Es ist bei der Herstellung der erfindungsgemäß verwendeten Polyvinyl(iso)acetale auch möglich, neben den beschriebenen verzweigeten Ketoverbindungen zusätzlich ein oder mehrere unverzweigte aliphatische Ketoverbindungen mit 2 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(iso)acetal, die aus verzweigten Ketoverbindungen resultieren, sollte über 50 Mol%, bevorzugt über 80 Mol% der Summe aus verzweigten und unverzweigten Acetalgruppen liegen.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Es ist bei der Herstellung der erfindungsgemäß verwendeten Polyvinyl(n)acetale auch möglich, neben den beschriebenen unverzweigeten Ketoverbindungen zusätzlich ein oder mehrere verzweigte aliphatische Ketoverbindungen mit 4 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(n)acetal, die aus unverzweigten Ketoverbindungen resultieren, sollte über 50 Mol%, bevorzugt über 80 Mol% der Summe aus verzweigten und unverzweigten Acetalgruppen liegen.

Die zur Herstellung der Polyvinylacetale (Polyvinyl(iso)- und Polyvinyl(n)acetale) in verschiedenen Schichten verwendeten Polyvinylalkohole können jeweils gleich oder unterschiedlich, rein oder eine Mischung von Polyvinylalkoholen mit unterschiedlichem Polymerisationsgrad oder Hydrolysegrad sein.

Der Polyvinylacetatgehalt der Polyvinylacetale (Polyvinyl(iso)- und Polyvinyl(n)acetale) in verschiedenen Schichten kann durch Verwendung eines zu einem entsprechenden Anteil hydrolisierten Polyvinylalkohols eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Teilfolie ändern. Es ist auch möglich, die Acetalisierung der Polyvinylalkohole mit einem Gemisch aus mehreren Aldehyden oder Ketoverbindungen durchzuführen.

Bevorzugt enthalten die Schichten Polyvinyl(iso)acetale bzw. Polyvinyl(n)acetale mit einem Anteil an Polyvinylacetatgruppen bezogen auf die Schichten jeweils gleich oder unterschiedlich 0.1 bis 15 Gew.%, bevorzugt 0,1 bis 3 Gew.% betragen.

Der Polyvinylalkoholgehalt der verwendeten Polyvinyl(iso)acetale und Polyvinyl(n)acetale kann in den Schichetn gleich oder unterschiedlich sein und 10 - 25 Gew.%, bevorzugt 18 - 23 Gew.% betragen.

Die Schichten enthalten bevorzugt unvernetztes Polyvinyl(iso)acetal bzw. Polyvinyl(n)acetal. Der Einsatz von vernetzten Polyvinyl(iso)acetalen und/oder vernetztem Polyvinyl(n)acetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Allgemein sinkt die Verträglichkeit von Weichmacher und Polyvinylacetalen mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalisierungsgrades, d.h. mit Abnahme der Anzahl an Hydroxygruppen und damit der Polarität des Polyvinylacetals.

Auf Grund der unterschiedlichen Polyvinylacetal-Gruppen (n und iso) der Schichten können diese bei gleicher Anzahl an Polyvinylalkoholgruppen unterschiedliche Mengen von Weichmachern aufnehmen, ohne dass es zum Ausschwitzen oder Migrieren des Weichmachers kommt. Unterschiedliche Mengen von Weichmacher haben auch unterschiedliche mechanische Eigenschaften der Schichten zur Folge, sodass die mechanischen Eigenschaften der Schichten und damit des Folienlaminats über die Auswahl der Weichmacher und/oder des Polyvinylalkoholgehalts der eingesetzten Polyvinylacetale eingestellt werden können

Bevorzugt weisen jeweils aneinander grenzende Schichten der Folienlaminate Polyvinylacetale auf, deren Anteile an Polyvinylalkoholgruppen sich um höchstens 0,5 Gew.% unterscheiden. Besonders bevorzugt weisen jeweils aneinander grenzende Schichten Polyvinylacetale mit gleichem Anteil an Polyvinylalkoholgruppen auf. Diese Varianten betreffen insbesondere die Ausführungsformen der Erfindung, die aneinander grenzende Schichten enthaltend jeweils Polyvinyl(iso)acetale und Polyvinyl(n)acetale aufweisen.

Die Schichten können jeweils gleiche oder unterschiedliche Weichmacher (erste, zweite oder dritte) enthalten. Bevorzugt ist der Einsatz von chemisch gleichen Weichmachern in allen Schichten. Jeweils aneinander grenzende Schichten der Folienlaminate können Weichmachergehalte aufweisen, die sich um höchstens 2 phr (phr = Gewichtsteile Weichmacher auf 100 Gewichtsteile Polyvinylacetal) unterscheiden.

Die Schichten können Weichmacher oder Weichmachermischungen aus mindestens einem der folgenden, für PVB-Folie bekannten Weichmacher enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat, Estern der Cyclohexandicarbonsäure wie etwa 1,2-Cyclohexandicarbonsäurediisononylester
- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethylhexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Besonders bevorzugt wird ein oder mehrere der folgenden Weichmacher verwendet: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat

Zusätzlich können die Schichten weitere Zusätze enthalten wie Restmengen an Wasser, UV-Absorber, Antioxidantien, Haftungsregulatoren, optische Aufheller, Stabilisatoren, Farbmittel, Verarbeitungshilfs-mittel, organische oder anorganische Nanopartikel, pyrogene Kieselsäure und/oder oberflächenaktive Stoffe.

In einer Variante der Erfindung weisen alle Schichten die genannten Additive in weitgehend der gleichen Konzentration auf. In einer besonderen Variante der Erfindung weist zumindest eine der Schichten keine Haftungsregulatoren (Antihaftmittel) auf. Als Antihaftmittel werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat eingesetzt.

Es ist ebenso möglich, dass mindestens eine der Schichten zur Verbesserung der Steifigkeit 0,001 bis 20 Gew.% SiO₂, bevorzugt 1 bis 15 Gew.%, insbesondere 5 bis 10 Gew.%, ggf. gedopt mit Al₂O oder ZrO₂ enthält.

Erfindungsgemäße Folienlaminate weisen bevorzugt die industriell üblichen Gesamtdicken von z.B. 0,38, 0,76, 1,14 mm (d.h. Vielfache von 0,38 mm) auf.

Zur Herstellung der erfindungsgemäßen Folienlaminate können die Schichten zunächst einzeln durch Extrusion hergestellt und anschließend mechanisch z.B. durch gemeinsames Aufrollen auf einen Folienwickel zur erfindungsgemäßen Zwischenschichtfolie zusammengefügt werden. Es ist auch möglich, die Folienlaminate durch gleichzeitige Coextrusion der Schichten herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Schichten eine unterschiedliche Färbung aufweisen. In der vorliegenden Erfindung ist dies durch ganz oder teilweises Einfärben zumindest einer Schicht realisierbar.

Die Herstellung der erfindungsgemäßen Folienlaminate bzw. Schichten folgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit liefern.

Alternativ kann einem bereits hergestellten erfindungsgemäßen Folienlaminat durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt. Erfindungsgemäße Folienlaminate weisen unabhängig vom Herstellverfahren eine einseitig oder besonders bevorzugt beidseitig aufgebrachte Oberflächenstruktur mit einer Rauhigkeit R_{z} von 15 bis 150 µm, bevorzugt R_{z} von 15 bis 100 µm, besonders bevorzugt R_{z} von 20 bis 80 µm und insbesondere R_{z} von 40 bis 75 µm auf.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Erfindungsgemäße Folienlaminate sind zur Herstellung von Glas/Folienlaminat/Glas, Glas/Folienlaminat/Kunststoff- oder Kunststoff/Folienlaminat/Kunststoff-Verbünden gut geeignet. Als Kunststoffscheiben werden insbesondere solche aus Polycarbonat, PET oder PMMA eingesetzt.

Besonders geeignet sind die Folienlaminate zur Herstellung von Glas/Folienlaminat/Glas, Glas/Folienlaminat/Kunststoff- oder Kunststoff/Folienlaminat/Kunststoff-Verbünden für Kraftfahrzeuge, Flugzeuge, Schiffe, Architekturverglasungen, Fassadenbauteilen oder zur Herstellung von Photovoltaikmodulen

Die erfindungsgemäßen Folien können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich, z.B. als Windschutzscheibe, als auch im Architekturbereich z.B. in Fenstern oder transparenten Fassadenbauteilen oder im Möbelbau verwendet werden.

### Messmethoden

Die Bestimmung des Polyvinylalkohol- und Polyvinylacetatgehaltes von PVB erfolgt gemäß ASTM D 1396-92. Der Acetalysierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Gew.% erfolgt gemäß dem Fachmann bekannten Formeln.

Der Weichmachergehalt der Folien wird durch Lösen der Folie in Ethanol und anschließende quantitative Gaschromatographie ermittelt. Um den Weichmachergehalt der Schichten zu ermitteln müssen die Mehrschichtfolien nach einer Konditionierungszeit von ca. 1 Woche d.h. nach weitgehendem Abschluss der Weichmachermigration wieder getrennt und einzeln vermessen werden.

### Messung der Zugeigenschaften der Folien

Die Werte für die Reißfestigkeiten und Reißdehnungen der Folie wurden mittels Zugprüfmaschine (Fa.TIRA) gemäß ISO 527 bei einer Geschwindigkeit von 200 mm/min bestimmt.

### Bestimmung des Kugelfalls nach ECE43

Die Bestimmung der Werte für den Kugelfall erfolgte nach ECE43 mit einer 2,26 Kg schweren Stahlkugel an Glasscheiben der Dimension 30x30 cm und einer Dicke von 2 mm, welche die in genannten Beispielen gezeigten Folien enthielten. Die Prüfung erfolgt an 10 Glasmustern bei einer Temperatur und Luftfeuchtigkeit gemäß ECE43.

### Pummeltest

Zur Prüfung der Haftung von Folien auf der Basis von weichmacherhaltigem teilacetalisiertem Polyvinylalkohol und zur Überprüfung der Wirkung von Antihaftmitteln wird ein sogenannter Pummeltest angewendet, der in der Literatur in gewissen Varianten beschrieben wird. Im Rahmen der vorliegenden Erfindung angegebene Pummelwerte wurden mit dem in der WO 03/033583 A1 beschriebenen Pummeltest bestimmt.

### Kompressionsschertest

Zur Beurteilung der Haftung einer PVB-Folie am Mineralglas wird ein sogenannter Kompressionsschertest gemäß nachfolgender Beschreibung durchgeführt. Zur Herstellung der Prüfkörper wird die zu prüfende PVB-Klebefolie zwischen zwei ebene Silikatglasscheiben des Formats 300 mm x 300 mm mit einer Dicke von 4 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von 30 min. zu einem ebenen Verbundsicherheitsglas verpresst. Aus dem so hergestellten Verbundsicherheitsglas werden 10 Proben mit den Maßen 25,4 mm x 25,4 mm geschnitten. Diese werden unter einem Winkel von 45° in eine zweiteilige Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d.h. der zu prüfenden Verbundsicherheitsglasscheiben, kommt.

Die Prüfparameter sind wie folgt:

| | |
|---|---|
| Prüfkörper: | quadratisch 25,4 mm x 25,4 mm |
| Verlegung: | untere Scheibe jeweils mit der Luft- bzw. Feuerseite zur Folie (Luft/Luft), oder obere und untere Scheibe jeweils mit der Zinnseite zur Folie (Bad/Bad) |
| Lagerung vor dem Versuch: | 4h bei Normklima 23°C/50% RLF |
| Vorschub: | 2,5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm2 oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint.

### Beispiele:

### Allgemeine Synthesevorschrift für Polyvinyl(n)acetal

100 Gewichtsteile des Polyvinylalkohols Mowiol 28-99 (Handelsprodukt von Kuraray Europe GmbH) wurden in 975 Gewichtsteilen Wasser unter Erwärmen auf 90 °C gelöst. Es wurden bei einer Temperatur von 40 °C 57,5 Gewichtsteile n-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 73°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein Polyvinyl(n)acetal mit einem Polyvinylalkoholgehalt von 20,3 Gew.% und einem Polyvinylacetatgehalt von 0,9 Gew.% erhalten.

### Allgemeine Synthesevorschrift für Polyvinyl(iso)acetal

100 Gewichtsteile des Polyvinylalkohols Mowiol 28-99 (Handelsprodukt von Kuraray Europe GmbH) wurden in 975 Gewichtsteilen Wasser unter Erwärmen auf 90 °C gelöst. Es wurden bei einer Temperatur von 40 °C 57,6 Gewichtsteile iso-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 73°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein Polyvinyl(iso)acetal mit einem Polyvinylalkoholgehalt von 20,3 Gew.% und einem Polyvinylacetatgehalt von 1,2 Gew.% erhalten.

Bei Verwendung von 55,6 Gewichtsteilen iso-Butyraldehyd unter ansonsten gleichen Bedingungen wurde ein Polyvinyl(iso)acetal mit einem Polyvinylalkoholgehalt von 22,3 Gew.% und einem Polyvinylacetatgehalt von 1,2 Gew.% erhalten.

### Herstellung von Folien

Es wurden Folien aus Teilschichten der Zusammensetzung gemäß Tabelle 1 und 2 durch Zusammenlegen hergestellt. Als Weichmacher wurde 3G8 (Triethylenglycol) verwendet. Der Weichmacheranteil war bei Zusammenlegen der Schichten gleich.

Beispiel 1 zeigt erfindungsgemäße Folien mit einem Aufbau Polyvinyl(iso)butyral/Polyvinyl(n)butyral/Polyvinyl(iso)butyral mit jeweils gleichem Polyvinylakohol- und Polyvinylacetatgehalt. Vergleichsbeispiel 2 zeigt eine nicht erfindungsgemäße Folie mit einem Aufbau Polyvinyl(n)butyral/Polyvinyl(n)butyral/Polyvinyl(n)butyral mit jeweils gleichem Polyvinylakohol- und Polyvinylacetatgehalt.

Tabelle 3 zeigt physikalische Daten der Folien. Es zeigt sich, dass obwohl die Hafteigenschaften der Folien an Glas auf ähnlichem Niveau waren, eine erheblich verbesserte Penetrationsfestigkeit der erfindungsgemäßen Folien erhalten wird.

Die Penetrationsfestigkeiten von Verbundsicherheitsglas hängen neben den bereits erwähnten Glas- und Foliendicken ebenfalls von der Glashaftung der verwendeten Folien ab. Es ist allgemein bekannt, dass Folien mit einer höheren Glashaftung (Pummel 8-10) schlechtere Kugelfallergebnisse liefern als Folien mit einer niedrigeren (Pummel 1-3) Glashaftung bei sonst identischem Aufbau, d.h. gleicher verwendeter Glas- und Foliendicke.

Um den Einfluss der Folienmechanik auf die Penetrationseigenschaften mittels Kugelfallprüfung zu bewerten, sollten vergleichende Beispiele ein ähnliches Haftungsniveau aufweisen, d.h sich nicht um mehr als eine Einheit im Pummelwert unterscheiden.

Beispiel 1 zeigt, dass bei Verwendung von erfindungsgemäßen Folien mit Iso-PVB in der Außenschicht eine deutlich bessere Penetrationsfestigkeit erreicht wird als im Beispiel 2, welches ein Vergleichsbeispiel darstellt, enthaltend nur Folien auf Basis Polyvinyl(n)butyral.

In den erfindungsgemäßen Beispielen 3 und 4 sind darüber hinaus die Gesamtfoliendicken geringer als in Beispiel 2, was eigentlich eine schlechtere Penetrationsfestigkeit erwarten lassen würde. Es zeigt sich jedoch überraschend, dass trotz geringerer Foliendicke eine deutlich bessere Penetrationsfestigkeit erhalten werden kann.

Es bedeuten in den Tabellen:

| | |
|---|---|
| PVA Iso-PVB A: | PVA-Gehalt des Iso-PVB Teilschicht A [Gew.%] |
| PVA Iso-PVB C | PVA-Gehalt des Iso-PVB Teilschicht C [Gew.%] |
| PVA n-PVB B | PVA-Gehalt des n-PVB Teilschicht B [Gew.%] |
| PVA n-PVB A | PVA-Gehalt des n-PVB Teilschicht A [Gew.%] |
| PVA Iso-PVB B | PVA-Gehalt des Iso-PVB Teilschicht B [Gew.%] |
| PVA n-PVB C | PVA-Gehalt des n-PVB Teilschicht C [Gew.%] |
| Dicke Iso-PVB | Schichtdicke Teilschicht Iso-PVB [mm] |
| Dicke n-PVB | Schichtdicke Teilschicht n-PVB [mm] |
| Haftung F/Sn CSS | Kompressionsschertest [N/mm2] |
| Kugelfall | Kugelfall nach ECE43 2mm Glas, 30x30 cm, 2,26 Kg |
| | Kugel [Fallhöhe, m] |

**Tabelle 1**

| Bsp | PVA Iso-PVB A | PVA Iso-PVB C | PVA n-PVB B | Dicke Iso-PVB | Dicke n-PVB | Gesamt dicke | WM-Gehalt Teilschicht Iso-PVB | WM-Gehalt Teilschicht n-PVB |
|---|---|---|---|---|---|---|---|---|
| | | | | | | | [Gew.%] | [Gew.%] |
| 1 | 20.3 | 20.3 | 20.3 | 0,3 | 0,2 | 0, 8 | 27,5 | 27,5 |
| 2 | - | - | 20.3 | - | 0, 8 | 0, 8 | 27,5 | 27,5 |

**Tabelle 2**

| Bsp | PVA n-PVB A | PVA Iso-PVB B | PVA n-PVB C | Dicke Iso-PVB | Dicke n-PVB | Gesamtdi cke | WM-Gehalt Teilschicht Iso-PVB | WM-Gehalt Teilschicht n-PVB |
|---|---|---|---|---|---|---|---|---|
| | | | | | | | [Gew.%] | [Gew.%] |
| 3 | 20.3 | 20.3 | 20.3 | 0,3 | 0,2 | 0,7 | 27,5 | 27,5 |
| 4 | 20.3 | 22.3 | 20.3 | 0.3 | 0,2 | 0,7 | 27,5 | 27,5 |

**Tabelle 3**

| Bsp | Haftung F/Sn CSS | Pummel F | Pummel Sn | Kugelfal 1 | Reissfes tigkeit [N/mm2] | Reissdeh nung [%] | WM-Gehalt Teilschicht Iso-PVB nach Laminierung [Gew.%] | WM-Gehalt Teilschicht n-PVB nach Laminierung [Gew.%] |
|---|---|---|---|---|---|---|---|---|
| 1 | 14, 6 | 4 | 4 | 11,0 | 29 | 254 | 28.3 | 25 |
| 2 | 14,5 | 5 | 3 | 5,0 | 30 | 270 | - | 27.5 |
| 3 | 13, 6 | 5 | 3 | 7,0 | 28,8 | 272 | 28, 6 | 26,5 |
| 4 | 15,9 | 6 | 4 | 7,75 | 29,9 | 270 | 27.6 | 27,4 |

## Patentansprüche

1. Folienlaminat aufgebaut aus mindestens drei Schichten A, B und C, jeweils enthaltend mindestens einen Weichmacher und mindestens ein Polyvinylacetal **dadurch gekennzeichnet** das mindestens eine der Schichten A, B oder C als Polyvinylacetal mindestens ein Polyvinyl(iso)acetal mit einem Anteil an Polyvinylalkoholgruppen von 10 - 25 Gew.% und einem Anteil an Polyvinyl(iso)acetalgruppen von 50 - 80 Gew.% enthält.

2. Folienlaminat nach Anspruch 1, **gekennzeichnet durch** die Abfolge und Zusammensetzung der Schichten A, B und C
- A enthaltend mindestens einen ersten Weichmacher und ein erstes Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B enthaltend mindestens einen zweiten Weichmacher und ein Polyvinyl(n)acetal mit einem Anteil an Polyvinylalkoholgruppen von 10 - 25 Gew.% und
- Teilfolie C, enthaltend mindestens einen dritten Weichmacher und ein zweites Polyvinyl(iso)acetal mit einem Anteil an Polyvinyl(iso)acetalgruppen von 50 - 80 Gew.% und einem Anteil an Polyvinylalkoholgruppen von 10
- 25 Gew.%.

3. Folienlaminat nach Anspruch 1, **gekennzeichnet durch** die Abfolge und Zusammensetzung der Schichten A, B und C
- A, enthaltend mindestens einen ersten Weichmacher und ein erstes Polyvinyl(n)acetal mit einem Anteil an Polyvinylalkoholgruppen von 10 - 25 Gew.% und
- B, enthaltend mindestens einen zweiten Weichmacher und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- C, enthaltend mindestens einen dritten Weichmacher und ein zweites Polyvinyl(n)acetal mit einem Anteil an Polyvinylalkoholgruppen von 10 - 25 Gew.%.

4. Folienlaminat nach Anspruch 1, **gekennzeichnet durch** die Abfolge und Zusammensetzung der Schichten A, B und C
- A, enthaltend mindestens einen ersten Weichmacher und ein erstes und Polyvinyl(iso)acetal mit einem Anteil an Polyvinyl(iso)acetalgruppen von 50 - 80 Gew.% und einem Anteil an Polyvinylalkoholgruppen von 10 - 25 Gew.% und
- B, enthaltend mindestens einen zweiten Weichmacher und zweites Polyvinyl(iso)acetal mit einem Anteil an Polyvinyl(iso)acetalgruppen von 50-80 Gew.% und einem Anteil an Polyvinylalkoholgruppen von 10 - 25 Gew.% und
- C, enthaltend mindestens einen dritten Weichmacher und ein drittes Polyvinyl(iso)acetal mit einem Anteil an Polyvinyl(iso)acetalgruppen von 50 - 80 Gew.% und einem Anteil an Polyvinylalkoholgruppen von 10 - 25 Gew.%.

5. Folienlaminat nach einem der Ansprüche 1 bis 4, **dadurch gekennzeichnet** das jeweils aneinander grenzende Schichten Weichmachergehalte aufweisen, die sich um höchstens 2 phr unterscheiden.

6. Folienlaminat nach einem der Ansprüche 1 bis 4, **dadurch gekennzeichnet** das jeweils aneinander grenzende Schichten Polyvinylacetale aufweisen, deren Anteile an Polyvinylalkoholgruppen sich um höchstens 0,5 Gew.% unterscheiden.

7. Folienlaminat nach einem der Ansprüche 1 bis 6, **dadurch gekennzeichnet** das das Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe resultieren.

8. Folienlaminat nach einem der Ansprüche 1 bis 6, **dadurch gekennzeichnet** das die Polyvinyl(n)acetale aus der Umsetzung von mindestens einem Polvinylalkohol mit einer oder mehreren aliphatischen, unverzweigten Ketoverbindung mit 2 bis 10 Kohlenstoffatomen resultieren.

9. Folienlaminat nach einem der Ansprüche 1 bis 8, **dadurch gekennzeichnet, dass** das Folienlaminat durch Coextrusion der Schichten hergestellt wird.

10. Folienlaminat nach einem der Ansprüche 1 bis 8, **dadurch gekennzeichnet, dass** das Folienlaminat durch Zusammenlegen der Schichten hergestellt wird.

11. Verwendung der Folienlaminate nach einem der Ansprüche 1 bis 10 zur Herstellung von Glas/Folienlaminat/Glas-Verbünden für Kraftfahrzeuge, Flugzeuge, Schiffe, Architekturverglasungen, Fassadenbauteilen oder zur Herstellung von Photovoltaikmodulen.
